# EUROPÄISCHE PATENTSCHRIFT

(11) **EP 1 970 582 B1**
(45) Veröffentlichungstag und Bekanntmachung des Hinweises auf die Patenterteilung: **04.11.2015**
(21) Anmeldenummer: 08004632.9
(22) Anmeldetag: 13.03.2008
(51) Int. Cl.: F16C 29/06, F16C 33/72, F16C 29/08

(54) **Dichtung in einem Linearlager**
Sealing element in a linear bearing
Joint dans un roulement linéaire

(30) Priorität: 16.03.2007 DE 102007012648
(43) Veröffentlichungstag der Anmeldung: 17.09.2008
(73) Patentinhaber: AB SKF, 415 50 Göteborg (SE)
(72) Erfinder: Mayer, Uwe, 97702 Münnerstadt (DE); Stahl, Erwin, 97714 Rottershausen (DE); Velde, Henryk, 97440 Werneck (DE); Warsch, Thorsten, 97247 Untereisenheim (DE); Wiesenau, Doreen, 97525 Schwebheim (DE)
(74) Vertreter: Kohl, Thomas

(56) Entgegenhaltungen:
- EP-A1- 0 390 156
- EP-A1- 0 456 082
- EP-A1- 1 199 485
- EP-A2- 0 972 960
- DE-U- 7 403 186
- JP-A- 10 299 768
- JP-U- 63 162 129

## Beschreibung

Die Erfindung betrifft ein Linearlager mit einer Dichtung.

Beispielsweise aus der DE 40 15 124 A1 ist ein Kugellager für Längsbewegungen bekannt, das einen mit seiner Innenfläche eine Welle umgebenden Käfig besitzt. Der Käfig hat dabei axiale Führungsbahnen für belastete Kugeln und axiale Rückführbahnen für unbelastete Kugeln sowie jeweils einen Deckel an jedem seiner beiden Enden. Jeder Deckel hat Umlenkbahnen, die jeweils eine Führungsbahn mit einer Rückführbahn endseitig verbindet. An einem der axialen Enden ist weiterhin eine Dichtung in den Käfig eingesetzt, die zum abdichtenden Anliegen an der Welle zwei, entgegengesetzt schräg auskragende Dichtlippen umfasst. Vergleichbares ist aus der EP 1 199 485 A1 bekannt.

Aus der JP 63 162129 U ist ein Linearlager bekannt, bei dem ein, eine Welle umschließendes Außenteil des Linearlagers über Kugeln gegenüber der welle längsverschieblich ist, wobei in das Außenteil an dessen axialem Ende eine ringförmige Dichtung eingesetzt ist, die mit einer einzelnen Dichtlippe gegen die Welle abdichtet. Dazu ist das Innenteil an besagtem axialen Ende innenmantelseitig mit einer umlaufenden Hinterschneidung ausgebildet, in die eine radiale Auskragung der Dichtung eingreift. Vergleichbares ist aus der DE 74 03 186 U bekannt.

Eine Aufgabe der Erfindung ist es, ein verbessertes Linearlager mit einer Dichtung zu schaffen.

Die Aufgabe wird durch den Gegenstand des Anspruchs 1 gelöst. Vorteilhafte Ausgestaltungen sind in den Unteransprüchen beschrieben.

Der Anspruch 1 betrifft ein Linearlager mit einer Dichtung und mit einem sich wenigstens über einen sektorartigen Bereich erstreckenden hohlzylinderartig ausgebildeten Außenteil, das zum wenigstens teilweisen umschließen eines Innenteils vorgesehen ist, wobei die beiden Teile gegeneinander wenigstens längsverschieblich sind, wobei die Dichtung entlang in Umfangsrichtung des Außenteils zwischen den Teilen angeordnet ist, wobei die Dichtung ausgehend vom Innenmantel einen Kernbereichs der Dichtung hin zum Innenteil zwei, entgegensetzt schräg auskragende Dichtlippen umfasst, und wobei die Dichtung ausgehend vom Außenmantel des Kernbereichs schräg nach radial außen einen Fortsatz umfasst.

Dabei bewirkt besagter Fortsatz, dass die Dichtung radial in Richtung zum Innenteil hin entsprechend angedrückt wird, so dass mit besonderem Vorteil dadurch eine besonders gute Dichtwirkung sichergestellt wird.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: in perspektivischer Ansicht ein teilzusammengebautes, in Umfangsrichtung in sich geschlossenes, hohlzylinderartiges Linearkugellager,
- Figur 2: in perspektivischer Ansicht ein Umlenkelement des Linearkugellagers der Figur 1,
- Figur 3: in perspektivischer Ansicht einen Schmierstoffspeicher des Linearkugellagers der Figur 1,
- Figur 4: in perspektivischer Ansicht ein Deckelement für das Linearkugellager der Figur 1,
- Figur 5: einen ausschnittsweisen Längsschnitt durch eine zwischen einem Umlenk- und einem Deckelement angeordnete nicht gemäß der Erfindung Dichtung,
- Figur 6: in perspektivischer Ansicht das zusammengebaute Linearkugellager der Figur 1,
- Figuren 7 und 8: in der Figur 6 mit A und B bezeichnete Ausschnittsvergrößerungen der Figur 6,
- Figur 9: in perspektivischer Ansicht ein in Umfangsrichtung unterbrochenes Linearkugellager,
- Figur 10: eine Frontansicht einer Dichtung für das Linearkugellager der Figur 9,
- Figur 11: einen Längsschnitt durch die Dichtung der Figur 10 und
- Figur 12: eine in der Figur 11 mit D bezeichnete Ausschnittsvergrößerung der Figur 11.

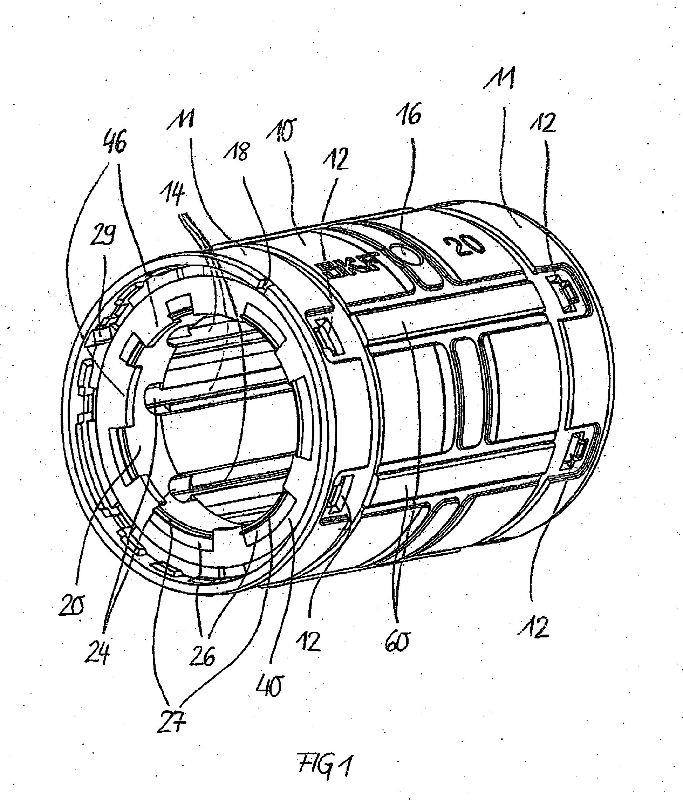

Die Figur 1 zeigt als ein Ausführungsbeispiel der Erfindung in perspektivischer Ansicht Elemente 10, 20 und 30 eines Linearkugellagers mit mehreren, zum endlosen Umlaufen vorgesehenen Kugelreihen. Durch die Höhlung des in der Figur 1 dargestellten Linearkugellagers ist eine Achse oder Welle zum Hindurchführen vorgesehen, so dass über die lasttragenden Kugeln und Laufbahneinlagen 60 das Linearkugellager gegenüber der Achse oder Welle wenigstens längsverschieblich ist. Lediglich aus Gründen der Übersichtlichkeit sind die Kugeln wie auch die Achse oder Welle nicht dargestellt.

Dabei umfasst das Linearkugellager ein hohlzylinderartiges Grundelement 10 mit im wesentlichen geradlinigen Führungen 14 für die belasteten und unbelasteten Kugeln sowie Aufnahmeöffhungen für Laufbahneinlagen 60, so dass die belasteten Kugeln einerseits auf der Achse oder Welle und andererseits auf den Laufbahneinlagen 60 abrollen. Dabei können wie in Figur 1 dargestellt, die Laufbahneinlagen 60 nach außen hin entsprechend einem Längsstreifen eines Zylindermantel ausgebildet sein, wobei in anderen Ausführungsformen auch Laufbahnelemente zum Einsatz kommen können, deren äußerer, mittlerer Bereich eine radial nach außen gerichtete Ausbauchung aufweist, wodurch mit dem Linearkugellager dann Fluchtungsfehler bis zu einem gewissen Grad ausgeglichen werden können. Dabei können aber mit Vorteil ein und dieselben Elemente 10, 20 und 30 sowohl für die winkeleinstellbare als auch für eine vergleichbare, nicht winkeleinstellbare Ausführung verwendet werden.

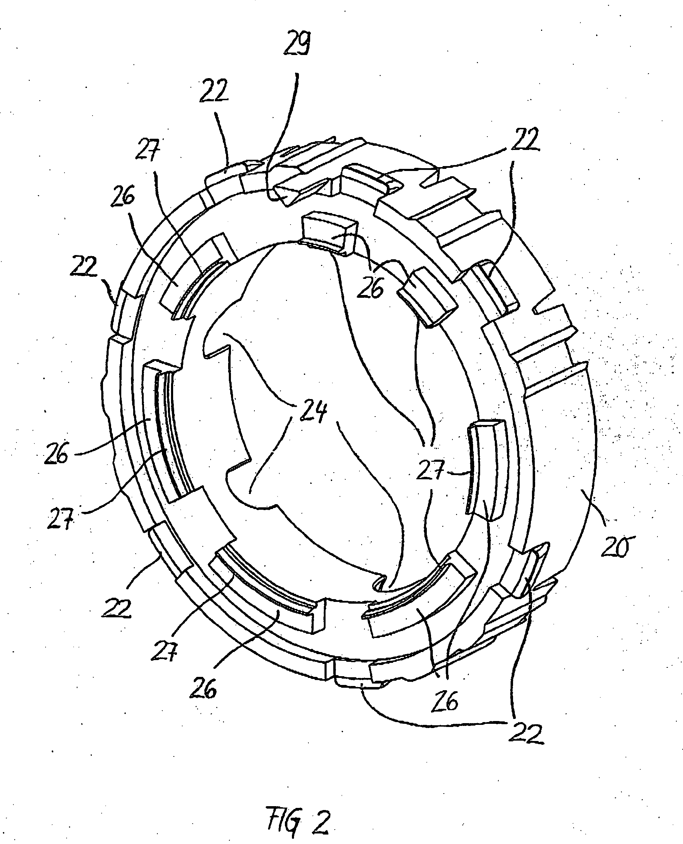

An beiden axialen Enden ist das Grundelement 10 gleichartig ausgebildet. Im folgenden wird die Beschaffenheit im Bereich der axialen Enden ausschließlich bezugnehmend auf das linke axiale Ende erläutert, wobei dies entsprechend natürlich auch für das andere axiale Ende gilt. Dabei ist besagtes axiales Ende des Grundelements 10 im Bereich des Außenmantels des Grundelements 10 mit einer derartigen axialen Auskragung 11 ausgebildet, dass in die Höhlung der Auskragung 11 ein Umlenkelement 20 und ein Deckelement 30 einschnappbar sind. In der Figur 1 ist das Umlenkelement 20 im eingeschnappten Zustand dargestellt. Die Figur 2 zeigt ebenfalls in perspektivischer Ansicht das Umlenkelement 20 in Alleinstellung.

Das Umlenkelement 20 umfasst dabei halbkreisartig ausgebildete Führungen 24 mittels derer die Kugeln zwischen den geradlinigen Führungen 14 im Grundelement 10 für die belasteten und unbelasteten Kugeln umgelenkt werden. Die Auskragung 11 ist für besagtes Einschnappen mit die Auskragung 11 radial durchdringenden Öffnungen 12 ausgebildet, in die entsprechende radiale Fortsätze 22 des Umlenkelements 20 zum Einschnappen vorgesehen sind. Dabei sind die Öffnungen 12 und die Fortsätze 22 derart aufeinander abgestimmt angeordnet und ausgebildet, dass das Grundelement 10 und das Umlenkelement 20 nur in einer vorgebbaren Verdrehposition miteinander verbindbar sind, so dass sich die Führungen 24 im Umlenkelement 20 passgenau an die des Grundelements 10 anschließen. Bei der Montage wird dabei das Umlenkelement 10 axial von links in die Auskragung 11 hineingedrückt und schnappt dann entsprechend ein.

Weiterhin ist das Umlenkelement 20 an der nach außen gerichteten Stirnseite in einem inneren Randbereich mit sektorartigen axialen Fortsätzen 26 ausgebildet, so dass zwischen den sektorartigen Fortsätzen 26 und diese gleichzeitig umschließend, ein ringartiger Schmierstoffspeicher 40 einsetzbar ist. Passgenau zwischen den sektorartigen Fortsätzen 26 des Umlenkelements 20 weist der Schmierstoffspeicher 40 zwischen den sektorartigen Fortsätzen 26 radial nach innen, hin zur Achse oder Welle auskragende Fortsätze 46 auf, die einem Schmieren der Achse oder Welle ausschließlich in denjenigen Bereichen dienen, auf denen die Kugeln zum Abrollen vorgesehen sind. Damit ist klar, dass auch die sektorartigen Fortsätze 26 am Umlenkelement 20 derart platziert sind, dass die radial nach innen hin auskragenden Fortsätze 46 des Schmierstoffspeichers 40 vorgenannter Bedingung genügen. Weiterhin sind die sektorartigen Fortsätze 26 am Umlenkelement 20 und die radialen Fortsätze 46 am Schmierstoffspeicher 40 derart aufeinander abgestimmt angeordnet und ausgebildet, dass eine bezüglich der gegenseitigen Verdrehposition richtige Montage sozusagen erzwungen wird.

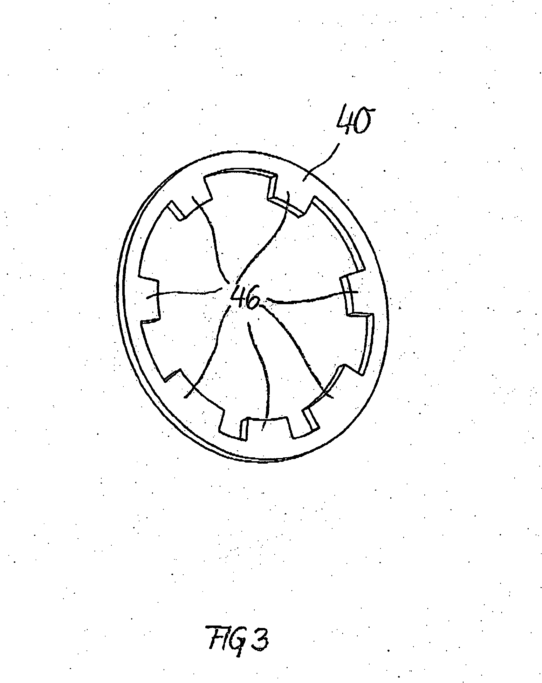

In der Figur 1 ist der Schmierstoffspeicher 40 in einem in das Umlenkelement 20 eingelegtem Zustand dargestellt, wohingegen er in Figur 3 nochmals in Alleinstellung perspektivisch dargestellt ist. Dabei kann der Schmierstoffspeicher 40 aus einem porösen Material, beispielsweise Schaumstoff, ausgebildet sein und als Schmierstoff ein Öl dienen, mit dem der Schaumstoff getränkt ist. Dadurch, dass ausschließlich Bereiche geschmiert werden, auf denen die Kugeln auf der Achse oder Welle abrollen, wird mit Vorteil die Gebrauchsdauer des einmal mit Schmierstoff gefüllten Schmierstoffspeichers 40 deutlich erhöht, bis hin zu einer Lebensdauerschmierung. In anderen Ausführungen kann aber auch eine Ausführung, bei der Öl in einer polymeren Matrix gehalten ist, was auch unter dem Stichwort "Solid Oil" bekannt ist, verwendet und/oder nachgeschmiert werden.

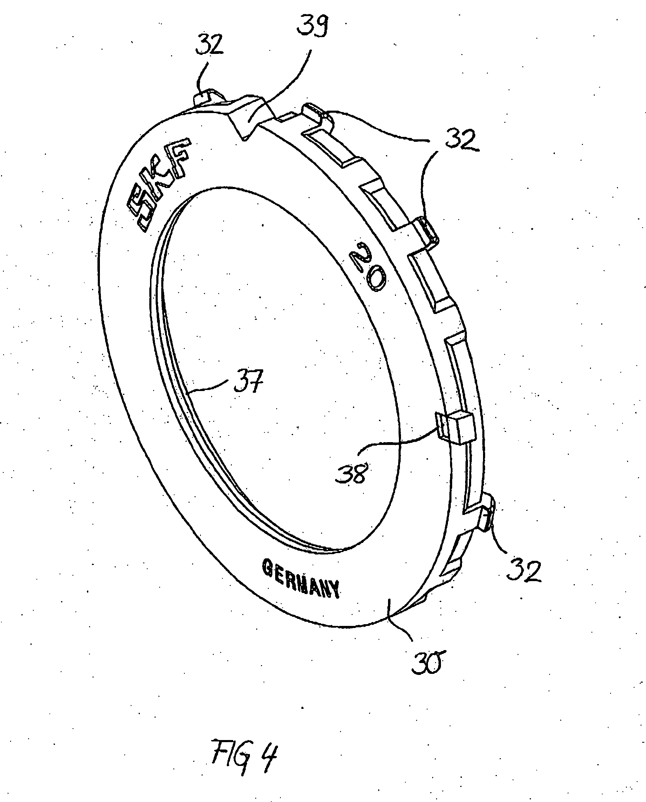

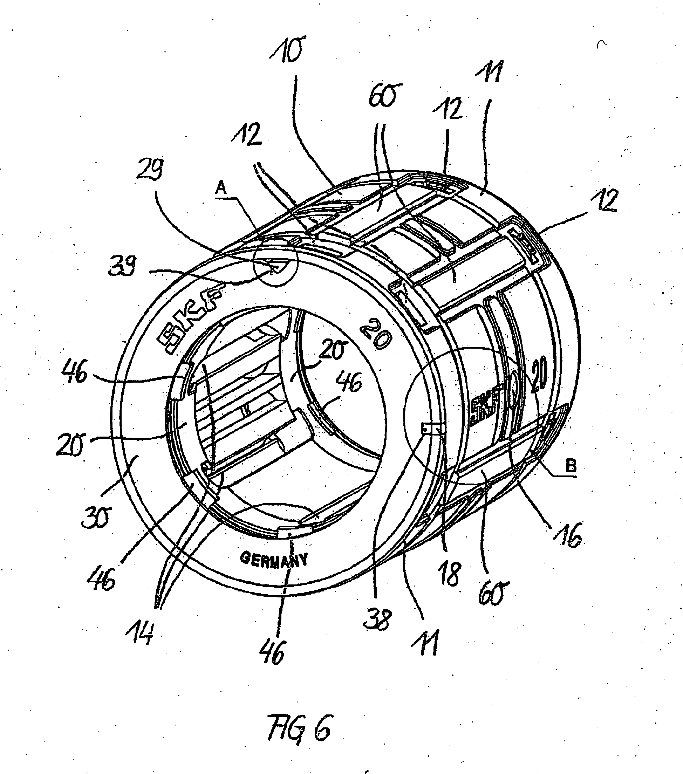

Abgeschlossen wird das in der Figur 1 dargestellte.Linearkugellager schließlich dadurch, dass von der linken Seite her noch das in der Figur 4 dargestellte Deckelement 30 in die Auskragung 11 des Grundelements 10 eingeschnappt wird, so dass sich das Linearkugellager entsprechend Figur 6 ergibt. Dabei wird das Deckelement 30 in die gleichen Öffnungen 12 der Auskragung 11 eingeschnappt, wozu auch das Deckelement 30 entsprechend ausgebildete radiale Fortsätze 32 aufweist. Dabei sind natürlich auch die radialen Fortsätze 32 am Deckelement 30 und die Öffnungen 12 der Auskragung 11 derart aufeinander abgestimmt angeordnet und ausgebildet, dass eine bezüglich der gegenseitigen Verdrehposition richtige Montage sozusagen erzwungen wird.

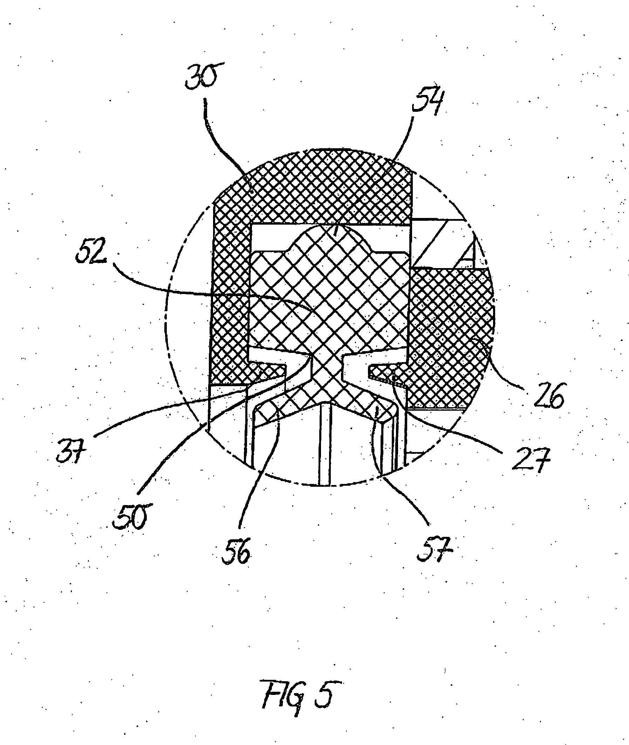

In der Figur 6 zwar nicht dargestellt, kann aber zwischen dem Umlenkelement 20 und dem Deckelement 30 gemäß Figur 5 auch eine, an sich bekannte Dichtung 50 mit angeordnet werden, die einem Abdichten des Linearkugellagers gegenüber der Achse oder Welle dient. Dabei zeigt die Figur 5 ausschnittsweise einen Längsschnitt der zwischen dem Umlenkelement 20 und dem Deckelement 30 angeordneten Dichtung 50. Die Dichtung 50 ist dabei als ein in sich geschlossener Ring ausgebildet. Die Dichtung 50 ist materialeinheitlich und einstückig aus einem Elastomermaterial hergestellt. Der Längsschnitt der Dichtung 50 weist dabei einen rechteckartigen Grundbereich 52 auf, an dem sich radial nach außen hin ein ringartig umlaufender nicht gemäß der Erfindung Wulst 54 anschließt und an dessen Innenmantel sich eine schräg nach außen und eine schräg nach innen auskragende Dichtlippe 56 und 57 anschließen.

Weiterhin sind die sektorartigen axialen Fortsätze 26 des Umlenkelements 20 mit axial auskragenden Nasen 27 versehen, die zum Eingreifen zwischen besagtem rechteckformigen Grundbereich 52 und der schräg nach innen hin weisenden Dichtlippe 57 vorgesehen sind. Ebenso ist das Deckelement 30 innenmantelseitig mit einer ringartig umlaufenden, axial nach innen hin auskragenden Nase 37 ausgebildet, die zum Eingreifen zwischen dem rechteckartigen Grundbereich 52 der Dichtung 50 und der schräg nach außen hin auskragenden Dichtlippe 56 der Dichtung 50 zum Eingriff vorgesehen ist. Damit wird mit besonderem Vorteil besagte Dichtung 50 sicher geführt, gehalten und zentriert. Durch die beiden Dichtlippen 56 und 57 und die Außengeometrie des Grundelements 10 wird dabei auch bei Fluchtungsfehlern zwischen dem Linearkugellager und der Achse oder Welle, also auch bei Winkelfehlern, eine gute Dichtwirkung erzielt, so dass Verschmutzungen vom Inneren des Linearkugellagers ferngehalten werden und ein vorhandener Schmierstoff im Inneren des Linearkugellagers gehalten wird.

Wie den Figuren 1 und 6 entnommen werden kann, ist das Grundelement 10 des Linearkugellagers weiterhin in einem Mittenbereich mit einer Vertiefung 16 ausgebildet, die einem axial- und verdrehgesicherten Befestigen gegenüber einer Einbauumgebung dient und gleichzeitig als Schmiernippel für ein Nachschmieren des Linearkugellagers genutzt werden kann. Gleichzeitig ist diese Umfangsstelle für das verdrchsichere Befestigen stirnseitig sowohl an der Stirnseite der Auskragung 11 des Grundelements 10 als auch am Deckelement 30 durch entsprechende Markierungen 18 und 38 gekennzeichnet, was die winkelpositionsrichtige Montage des Linearkugellagers erheblich vereinfacht. Dabei schließt sich an die als Vertiefung ausgebildete Markierung 38 am Deckelement 30 ein radialer Fortsatz an, der zum Eingreifen in die als Aussparung ausgebildete Markierung 18 an der Auskragung 11 entsprechend passgenau ausgebildet ist.

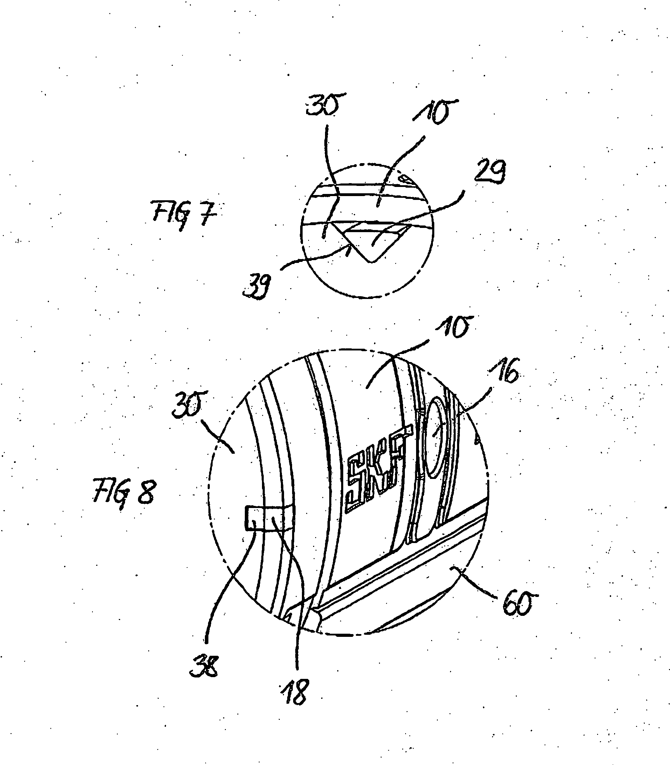

Weiterhin ist das Linearkugellager für eine vorgebbare, an einer bestimmten Umfangsstelle im wesentlichen senkrecht zum Zylindermantel stehende Hauptlastrichtung ausgebildet, die ebenfalls an der Stirnseite des Linearkugellagers durch eine Markierung gekennzeichnet ist. Dabei wird die Markierung durch einen axial vorstehenden Fortsatz 29 am Umlenkelement 20 realisiert, der in eine entsprechende Ausnehmung 39 des Deckelements 30 eingreift. Dabei sind insbesondere das Deckelement 30 und das Umlenkelement 20 unterschiedlich farbig ausgebildet, so dass die Markierung besonders gut erkennbar ist. Auch diese Markierung erleichtert dabei den bezüglich der Hauptlastrichtung richtigen Einbau des Linearkugellagers. Die Figuren 7 und 8 zeigen dabei noch einmal in der Figur 6 mit A und B bezeichnete Ausschnittsvergrößerungen der Stirnseite im Bereich der Markierungen 18 und 38.

Die Elemente 10, 20 und 30 sind insbesondere spritzgusstechnisch aus einem Kunststoff hergestellt. Dabei sind insbesondere das Umlenkelement 20 und das Deckelement 30 in axialer Richtung frei von Hinterschneidungen ausgebildet, was deren spritzgusstechnische Herstellung besonders einfach und damit kostengünstig ermöglicht. Aufwendige Schieber am Spritzgusswerkzeug sind damit mit Vorteil nicht erforderlich. Auch das Grundelement ist diesbezüglich mit besonderem Vorteil derart gestaltet, dass es innen ausschließlich axial entformbar ist und nur nach außen radial entformt werden muss. Damit kann ebenfalls ein einfach aufgebautes Spritzgusswerkzeug zum Einsatz kommen, was sich wiederum positiv auf die Kostenposition auswirkt. Besonders hervorzuheben ist dabei, dass die Herstellung mit besonderem Vorteil ohne eine Zwangsentformung auskommt.

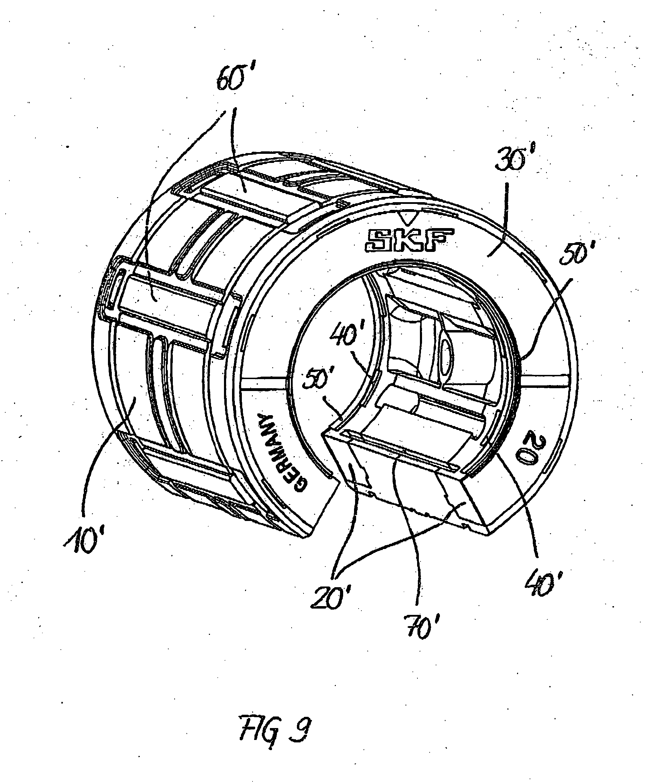

Die Figur 9 zeigt als ein weiteres Ausführungsbeispiel der Erfindung in perspektivischer Ansicht ein Linearkugellager, das anders als das Lincarkugellager der Figuren 1 bis 8 in Umfangsrichtung nicht in sich hohlzylinderartig geschlossen ausgebildet ist, sondern der Hohlzylinder in einem sektorartigen Umfangsabschnitt mit einer Durchbrechung ausgebildet ist, die die volle Wandstärke und die gesamte Längsausdehnung des Linearkugellagers erfasst. Das Linearkugellager der Figur 9 ist dabei ähnlich dem Linearkugellager der Figuren 1 bis 8 aus den dort bezeichneten Elementen 10', 20' und 30' zusammengesetzt. Dabei umfassen das Grundelement 10' und die an beiden axialen Enden angeordneten Umlenkelemente 20' innenmantelseitig, beiderseits besagter Durchbrechung rillenartige Vertiefungen 70', in denen zum Abdichten gegenüber der Achse eine entsprechende Dichtung eingesetzt werden kann.

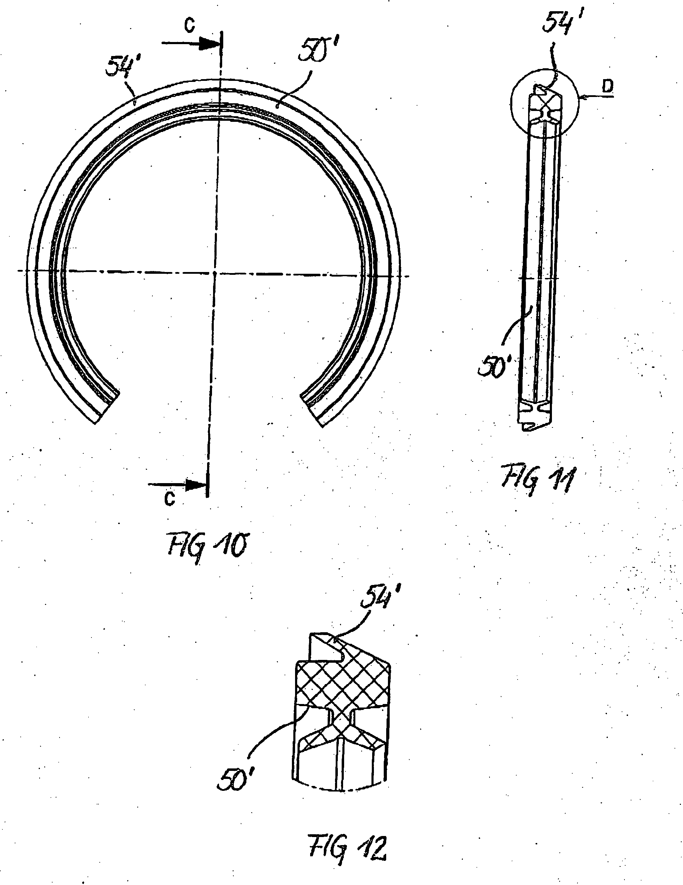

Weiterhin kann auch bei dem Linearkugellager der Figur 9 zwischen dem Umlenkelement 20' und dem Deckelement 30' eine Dichtung 50' eingesetzt sein, die sich von der Dichtung 50 gemäß der Figur 5 dadurch unterscheidet, dass die Dichtung 50' keinen in sich geschlossenen Ring ausbildet und dass auch außenmantelseitig anstelle des ringartig umlaufenden Wulstes 54 ein schräg nach außen auskragender Fortsatz 54' ausgebildet ist, was entsprechend in den Figuren 10 bis 12 dargestellt ist. Die Figur 10 zeigt dabei eine Frontansicht, die Figur 11 einen Längsschnitt entlang der Linie C-C der Figur 10 und die Figur 12 das in der Figur 10 mit D bezeichnete Detail der Dichtung 50'. Dabei bewirkt besagter schräg nach außen orientierter Fortsatz 54', dass die Dichtung 50' radial in Richtung zur Achse hin entsprechend angedrückt wird, so dass mit besonderem Vorteil dadurch eine besonders gute Dichtwirkung sichergestellt wird. Ansonsten gilt das vorausgehend zu den Figuren 1 bis 8 Beschriebene für die Figuren 9 bis 11 entsprechend, wobei bei den Figuren 9 bis 12 den Figuren 1 bis 8 entsprechende Bauelemente mit gleichen Bezugszeichennummern, ergänzt um einen Hochstrich, bezeichnet sind.

In anderen Ausführungen kann natürlich auch das Dichtungsdesign entsprechend den Figuren 10 bis 12 bei einem in Umfangsrichtung in sich geschlossenen ausgebildeten, hohlzylinderartigen Linearwälzlager angewandt sein und umgekehrt natürlich auch eine entsprechend der Figur 5 ausgebildete Dichtung bei einem in Umfangsrichtung in sich nicht geschlossen ausgebildeten Linearwälzlager zum Einsatz kommen.

### Bezugszeichenliste

- 10, 10': Grundelement
- 11: Auskragung
- 12: Öffnung
- 14: Führung
- 16: Vertiefung
- 18: Markierung

- 20, 20': Umlenkelement
- 22: radialer Fortsatz
- 24: Führung
- 26: axialer Fortsatz
- 27: Nase
- 29: Fortsatz

- 30, 30': Deckelement
- 32: radialer Fortsatz
- 37: Nase
- 38: Markierung
- 39: Ausnehmung

- 40, 40': Schmierstoffspeicher
- 46: Fortsatz

- 50, 50': Dichtung
- 52: rechteckförmiger Grundbereich
- 54: Wulst
- 54': Fortsatz
- 56, 57: Dichtlippe

- 60, 60': Laufbahneinlage

- 70': Vertiefung

## Patentansprüche

1. Linearlager mit einer Dichtung (50') und mit einem sich wenigstens über einen sektorartigen Bereich erstreckenden hohlzylinderartig ausgebildeten Außenteil (10, 20, 30; 10', 20', 30'), das zum wenigstens teilweisen umschließen eines Innenteils vorgesehen ist, und die beiden Teile gegeneinander wenigstens längsverschieblich sind, wobei die Dichtung (50') entlang in Umfangsrichtung des Außenteils (10, 20, 30; 10', 20', 30'), zwischen den Teilen angeordnet ist und wobei die Dichtung (50') ausgehend von einem Innenmantel einen Kernbereichs (52) der Dichtung (50') hin zum Innenteil zwei, entgegensetzt schräg auskragende Dichtlippen (56, 57) umfasst, **dadurch gekennzeichnet dass** die Dichtung (50') ausgehend von einem Außenmantel des Kernbereichs (52) schräg nach radial außen einen Fortsatz (54') umfasst.

2. Linearlager nach Anspruch 1, wobei die Dichtung (50') materialeinheitlich und einstückig aus einem Elastomermaterial ausgebildet ist.

3. Linearlager nach einem der Ansprüche 1 oder 2, wobei der Kernbereich (52) mit einer rechteckförmigen Längsschnittfläche ausgebildet ist.

4. Linearlager nach einem der Ansprüche 1 bis 3, wobei das Außenteil folgende Merkmale beinhaltet:
- Ein Grundelement (10, 10') mit im wesentlichen geradlinigen Führungen für die belasteten und unbelasteten, zum endlosen Umlauf vorgesehene Wälzkörper,
- wenigstens ein Umlenkelement (20, 20') mit wenigstens einer Umlenkführung zwischen den geradlinigen Führungen (24),
- wenigstens ein Deckelement (30, 30') und
- an wenigstens einem axialen Ende des Grundelements (10, 10') ist dieses im Bereich des Außenmantels mit einer derartigen axialen Auskragung (11) ausgebildet, dass in der Höhlung der Auskragung (11) nacheinander das Umlenkelement (20, 20') und das Deckelelement (30, 30') angeordnet sind.

5. Linearlager nach Anspruch 4, wobei die Dichtung (50') zwischen den Elementen (10, 10', 20, 20', 30, 30'), insbesondere zwischen dem Umlenk- und dem Deckelement (20, 20', 30, 30') angeordnet ist.

6. Linearlager nach Anspruch 5, wobei das Umlenkelement (20, 20') und/oder das Deckelement (30, 30') stirnseitig mit axial auskragenden Nasen (27, 37) ausgebildet sind, die zum Hineinragen zwischen den Kernbereich (52) und der schräg nach außen oder innen hin auskragenden Dichtlippe (56, 57) vorgesehen sind.

7. Linearlager nach einem der Ansprüche 4 bis 6, wobei ein Schmierstoffspeicher (40, 40') an eine Stirnseite des Umlenkelements (20, 20') unmittelbar anschließend angeordnet ist, das Umlenkelement (20, 20') an der dem Schmierstoffspeicher (40, 40') zugewandten Stirnseite im Bereich des Innenmantels mit axial vorstehenden sektorartigen Fortsätzen (26) ausgebildet ist, und der Schmierstoffspeicher (40, 40') die sektorartigen Fortsätze (26) des Umlenkelements (20, 20') ringartig umschließend und mit radialen zwischen den sektorartigen Fortsätzen (26) des Umlenkelements (20, 20') radial nach innen hin auskragenden Fortsätzen (46) ausgebildet ist.

8. Linearlager nach den Ansprüchen 6 und 7, wobei am Umlenkelement (20, 20') die Nasen (27) an den Stirnseiten der sektorartigen Fortsätze (26) angeordnet sind.

9. Linearlager nach einem der Ansprüche 4 bis 8, wobei die Auskragung (11), das Umlenkelement (20,20') und das Deckelement (30, 30') derart ausgebildet sind, dass die Elemente (20, 20', 30, 30') in die Auskragung (11) einschnappbar sind.

10. Linearlager nach einem der Ansprüche 4 bis 9, wobei das Umlenkelement (20, 20') und das Deckelelement (30, 30') in axialer Richtung frei von Hinterschneidungen ausgebildet sind.

11. Linearlager nach einem der Ansprüche 4 bis 10, wobei wenigstens eines der Element (10, 10', 20, 20', 30, 30') aus Kunststoff ausgebildet ist.

12. Linearlager nach einem der Ansprüche 4 bis 11, wobei wenigstens eines der Elemente (10, 10', 20, 20', 30, 30') durch ein Spritzgießen hergestellt ist.

13. Linearlager nach einem der Ansprüche 4 bis 12, wobei die Wälzkörper als Kugeln ausgebildet sind.

14. Linearlager nach einem der Ansprüche 4 bis 13, wobei das Grundelement (10') und das Umlenkelement (20') innenmantelseitig beiderseits den Sektorgrenzen des Außenteils mit längsverlaufenden rillenartigen Vertiefungen (70') ausgebildet sind, in denen für ein Abdichten entsprechende Abdichtungen angeordnet sind.

15. Linearlager nach einem der Ansprüche 1 bis 13, wobei die Dichtung, das Außenteil und/oder die Elemente (10, 20, 30) in Umfangsrichtung in sich geschlossen ausgebildet sind.

## Claims

1. Linear bearing having a seal (50') and having an outer part (10, 20, 30; 10', 20', 30') of hollow-cylindrical configuration which extends at least over a sector-like region and is provided for enclosing an inner part at least partially, and the two parts being at least longitudinally displaceable with respect to one another, the seal (50') being arranged between the parts along the circumferential direction of the outer part (10, 20, 30; 10', 20', 30'), and, starting from an inner shell of a core region (52) of the seal (50') towards the inner part, the seal (50') comprising two sealing lips (56, 57) which project obliquely in an opposed manner, **characterized in that**, starting from an outer shell of the core region (52), the seal (50') comprises a projection (54') obliquely to the radial outside.

2. Linear bearing according to Claim 1, the seal (50') being configured from one material and in one piece from an elastomer material.

3. Linear bearing according to either of Claims 1 and 2, the core region (52) being configured with a rectangular longitudinal sectional face.

4. Linear bearing according to one of Claims 1 to 3, the outer part comprising the following features:
- a main element (10, 10') with substantially rectilinear guides for the loaded and unloaded rolling bodies which are provided for endless circulation,
- at least one deflecting element (20, 20') with at least one deflecting guide between the rectilinear guides (24),
- at least one cover element (30, 30'), and,
- at at least one axial end of the main element (10, 10'), the latter is configured in the region of the outer shell with an axial overhang (11) which is such that the deflecting element (20, 20') and the cover element (30, 30') are arranged one behind another in the cavity of the overhang (11).

5. Linear bearing according to Claim 4, the seal (50') being arranged between the elements (10, 10', 20, 20', 30, 30'), in particular between the deflecting element (20, 20') and the cover element (30, 30').

6. Linear bearing according to Claim 5, the deflecting element (20, 20') and/or the cover element (30, 30') being configured on the end side with axially projecting lugs (27, 37) which are provided for protruding in between the core region (52) and the sealing lip (56, 57) which projects obliquely towards the outside or inside.

7. Linear bearing according to one of Claims 4 to 6, a lubricant store (40, 40') being arranged so as to adjoin an end side of the deflecting element (20, 20') directly, the deflecting element (20, 20') being configured with axially projecting sector-like projections (26) in the region of the inner shell on the end side which faces the lubricant store (40, 40'), and the lubricant store (40, 40') being configured so as to enclose the sector-like projections (26) of the deflecting element (20, 20') annularly and with radial projections (46) which project radially towards the inside between the sector-like projections (26) of the deflecting element (20, 20').

8. Linear bearing according to Claims 6 and 7, the lugs (27) being arranged on the deflecting element (20, 20') on the end sides of the sector-like projections (26).

9. Linear bearing according to one of Claims 4 to 8, the overhang (11), the deflecting element (20, 20') and the cover element (30, 30') being configured in such a way that the elements (20, 20', 30, 30') can be snapped into the overhang (11).

10. Linear bearing according to one of Claims 4 to 9, the deflecting element (20, 20') and the cover element (30, 30') being configured so as to be free from undercuts in the axial direction.

11. Linear bearing according to one of Claims 4 to 10, at least one of the elements (10, 10', 20, 20', 30, 30') being configured from plastic.

12. Linear bearing according to one of Claims 4 to 11, at least one of the elements (10, 10', 20, 20', 30, 30') being manufactured by way of an injection moulding operation.

13. Linear bearing according to one of Claims 4 to 12, the rolling bodies being configured as balls.

14. Linear bearing according to one of Claims 4 to 13, the main element (10') and the deflecting element (20') being configured with longitudinally running, groove-like depressions (70') on the inner shell side on both sides of the sector boundaries of the outer part, in which depressions (70') corresponding seals for a sealing action are arranged.

15. Linear bearing according to one of Claims 1 to 13, the seal, the outer part and/or the elements (10, 20, 30) being of closed configuration in the circumferential direction.

## Revendications

1. Roulement linéaire comprenant un joint d'étanchéité (50') et une partie extérieure (10, 20, 30 ; 10', 20', 30') réalisée sous forme de cylindre creux, s'étendant au moins sur une région de type secteur, qui est prévue pour entourer au moins en partie une partie intérieure et les deux parties étant déplaçables l'une par rapport à l'autre au moins longitudinalement, le joint d'étanchéité (50') étant disposé le long de la direction périphérique de la partie extérieure (10, 20, 30 ; 10', 20', 30') entre les parties, et le joint d'étanchéité (50') comprenant, depuis une enveloppe intérieure d'une région de noyau (52) du joint d'étanchéité (50') vers la partie intérieure deux lèvres d'étanchéité (56, 57) saillant obliquement de manière opposée, **caractérisé en ce que** le joint d'étanchéité (50') comprend, depuis une enveloppe extérieure de la région de noyau (52), un prolongement (54') disposé obliquement radialement à l'extérieur.

2. Roulement linéaire selon la revendication 1, dans lequel le joint d'étanchéité (50') est réalisé en un seul matériau et d'une seule pièce à partir d'un matériau élastomère.

3. Roulement linéaire selon l'une quelconque des revendications 1 ou 2, dans lequel la région de noyau (52) est réalisée avec une surface rectangulaire en coupe longitudinale.

4. Roulement linéaire selon l'une quelconque des revendications 1 à 3, dans lequel la partie extérieure comprend les caractéristiques suivantes
- un élément de base (10, 10') avec des guides essentiellement rectilignes pour les corps de roulement sollicités et non sollicités prévus pour une circulation sans fin,
- au moins un élément de renvoi (20, 20') avec au moins un guide de renvoi entre les guides rectilignes (24),
- au moins un élément de couvercle (30, 30') et
- au niveau d'au moins une extrémité axiale de l'élément de base (10, 10'), celui-ci est réalisé dans la région de l'enveloppe extérieure avec une saillie axiale (11) telle que dans le creux de la saillie (11) l'élément de renvoi (20, 20') et l'élément de couvercle (30, 30') soient disposés l'un derrière l'autre.

5. Roulement linéaire selon la revendication 4, dans lequel le joint d'étanchéité (50') est disposé entre les éléments (10, 10', 20, 20', 30, 30'), en particulier entre l'élément de renvoi et l'élément de couvercle (20, 20', 30, 30').

6. Roulement linéaire selon la revendication 5, dans lequel l'élément de renvoi (20, 20') et/ou l'élément de couvercle (30, 30') sont réalisés du côté frontal avec des nez saillant axialement (27, 37), qui sont prévus pour pénétrer entre la région de noyau (52) et la lèvre d'étanchéité (56, 57) saillant obliquement vers l'extérieur ou vers l'intérieur.

7. Roulement linéaire selon l'une quelconque des revendications 4 à 6, dans lequel un réservoir de lubrifiant (40, 40') est disposé de manière à se raccorder directement à un côté frontal de l'élément de renvoi (20, 20'), l'élément de renvoi (20, 20') est réalisé au niveau du côté frontal tourné vers le réservoir de lubrifiant (40, 40') dans la région de l'enveloppe intérieure avec des prolongements de type secteur saillant axialement (26), et le réservoir de lubrifiant (40, 40') est réalisé de manière à entourer sous forme annulaire les prolongements de type secteur (26) de l'élément de renvoi (20, 20') et avec des prolongements radiaux (46) saillant radialement vers l'intérieur entre les prolongements de type secteur (26) de l'élément de renvoi (20, 20').

8. Roulement linéaire selon les revendications 6 et 7, dans lequel les nez (27) sont disposés au niveau de l'élément de renvoi (20, 20') sur les côtés frontaux des prolongements de type secteur (26).

9. Roulement linéaire selon l'une quelconque des revendications 4 à 8, dans lequel la saillie (11), l'élément de renvoi (20, 20') et l'élément de couvercle (30, 30') sont réalisés de telle sorte que les éléments (20, 20', 30, 30') puissent être encliquetés dans la saillie (11).

10. Roulement linéaire selon l'une quelconque des revendications 4 à 9, dans lequel l'élément de renvoi (20, 20') et l'élément de couvercle (30, 30') sont réalisés dans la direction axiale sans contre-dépouille.

11. Roulement linéaire selon l'une quelconque des revendications 4 à 10, dans lequel au moins l'un des éléments (10, 10', 20, 20', 30, 30') est réalisé en plastique.

12. Roulement linéaire selon l'une quelconque des revendications 4 à 11, dans lequel au moins l'un des éléments (10, 10', 20, 20', 30, 30') est fabriqué par moulage par injection.

13. Roulement linéaire selon l'une quelconque des revendications 4 à 12, dans lequel les corps de roulement sont réalisés sous forme de billes.

14. Roulement linéaire selon l'une quelconque des revendications 4 à 13, dans lequel l'élément de base (10') et l'élément de renvoi (20') sont réalisés du côté de l'enveloppe intérieure de chaque côté des limites de secteur de la partie extérieure avec des renfoncements (70') de type rainure s'étendant longitudinalement, dans lesquels sont disposés des joints d'étanchéité correspondants pour réaliser une étanchéité.

15. Roulement linéaire selon l'une quelconque des revendications 1 à 13, dans lequel le joint d'étanchéité, la partie extérieure et/ou les éléments (10, 20, 30) sont réalisés sous forme fermée en soi dans la direction périphérique.
